# EUROPEAN PATENT SPECIFICATION

(11) **EP 1 384 299 B1**
(45) Date of publication and mention of the grant of the patent: **14.09.2011**
(21) Application number: 02702437.1
(22) Date of filing: 06.03.2002
(51) Int. Cl.: H02G 7/02, H01R 4/24

(54) **ANCHOR CLAMP FOR THE TERMINATION OF AN OVERHEAD CABLE**
ANKERKLEMME ZUM ABSCHLUSS EINES FREILEITUNGSKABELS
PINCE D'ANCRAGE POUR LA TERMINAISON D'UN CABLE AERIEN

(30) Priority: 14.03.2001 FI 20010510
(43) Date of publication of application: 28.01.2004
(73) Proprietor: Ensto Finland Oy, 06100 Porvoo (FI)
(72) Inventor: TÖLKKÖ, Esko, FIN-06150 Porvoo (FI)
(74) Representative: LEITZINGER OY
(86) International application number: PCT/FI2002/000174
(87) International publication number: WO 2002/073765

(56) References cited:
- EP-A1- 0 387 215
- DE-A1- 2 611 080
- DE-A1- 4 312 713
- FR-A1- 2 789 815
- GB-A- 2 063 984

## Description

The present invention relates to an anchor clamp for the termination of an overhead cable, which comprises
- a body;
- a clamp handle fixed to the body or a part connected to the body; and
- wedge parts moving in relation to the body, between which the overhead cable is pressed when pulling directed at the cable moves the wedge parts in relation to the body.

An anchor clamp with the features of the preamble of claim 1 is disclosed in FR 2 789 815.

A problem with known anchor clamps of this type is that the cable slips between the wedges in the direction of pulling, especially before the wedges have moved sufficiently to secure attachment. This problem arises especially in cases where the wedge surfaces grip on the cable insulation. A second problem with these anchor clamps is their bulky and heavy construction.

The aim of the invention is to provide an improved anchor clamp, where the movement of the wedges and especially the start of movement at the initial stages of pulling is ensured by means of a particular securing part, which may pass through the cable insulation to the cable metal and at the same time act as a connector for equalising the potential between the cable and the anchor clamp body.

This aim is achieved on the basis of the characteristics disclosed in the appended claim 1.

The dependent claims disclose preferred embodiments of the invention by means of which is achieved a lightweight, durable and reliable structure.

The invention is illustrated in the following by means of examples, with reference to the accompanying drawings in which
- Figure 1: shows a perspective view of the anchor clamp in a situation of use;
- Figure 2: shows the same as Figure 1 with a slightly modified embodiment;
- Figure 3: shows the anchor clamp according to the invention as seen from above;
- Figure 4: shows the body of the anchor clamp as seen from above and from the end;
- Figure 5: shows the wedge parts of the anchor clamp as seen from above and from the ends;
- Figure 6: shows the plastic part of the anchor clamp as seen from above and from the end;
- Figure 7: shows a splice plate of the anchor clamp as seen from the side and the end; and
- Figure 8: shows a guide piece of the anchor clamp.

The body 1 is a piece of metal on the sides of which are receiving grooves 1a for the clamp handle 3, and inside which is a receiving space 1b for the wedge parts 2. Into this receiving space 1b is also placed a separate plastic part 6, in which the wedge parts 2 are received between the wedge surfaces 6b of the plastic part 6. Between the wedge surfaces 6b of the plastic part 6 and the wedge surfaces 2b of the wedge parts 2 are metallic splice plates 7, the bent ends 7b of which partly cover the opposite ends of the body 1 and the plastic part 6, thus keeping the plastic part 6 in its place in the body 1.

On the bent ends 7b of the splice plates 7 are holes 7a at the grooves 1a of the body for the lead-through of the clamp handle 3. At the ends of the branches of the clamp handle 3 are threads and adjusting screws 3a, which rest against the bent ends 7b of the splice plates 7.

On the surfaces of the wedge parts 2 facing each other are cable grooves 2a, on the bottoms of which has been cut transverse grooving, the plane of the grooves being inclined, for example, by 45° in relation to the normal plane of the cable grooves. This improves the grip of the transverse grooving on the surface of the cable.

The wider ends of the wedge parts 2 protrude from the body 1, that is, the wedge parts 2 are essentially longer than the body 1.

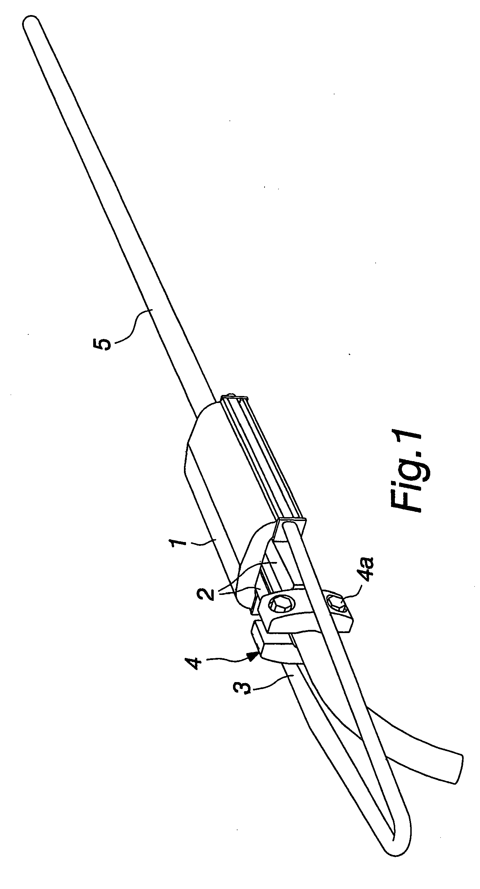

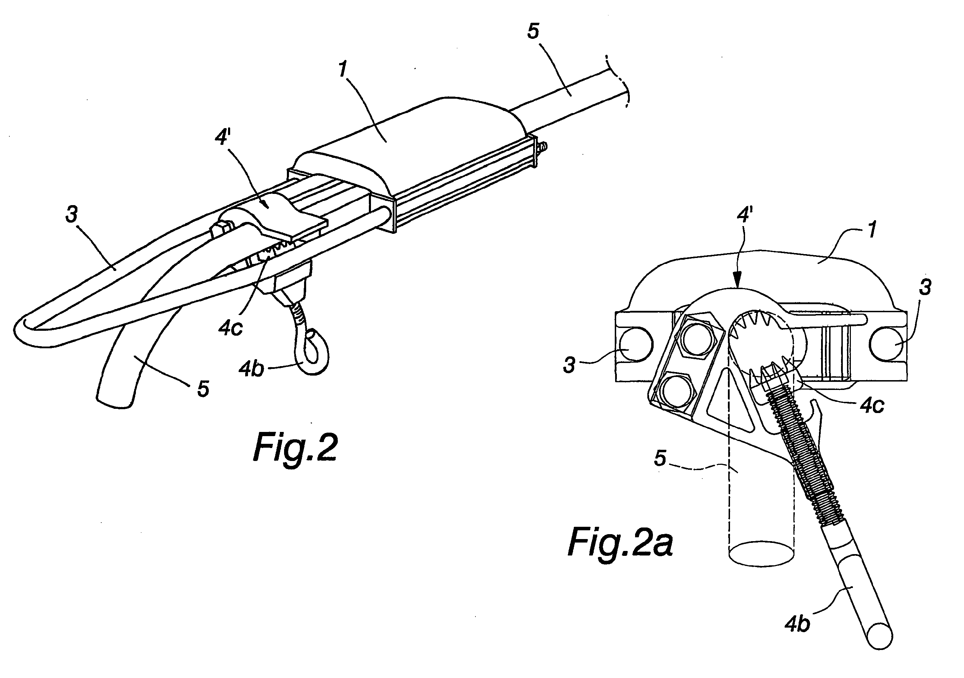

The clamp also comprises a stay tightener, which is marked by reference numeral 4 in the embodiment of Figure 1, and by reference numeral 4' in the embodiment of Figure 2. The stay tightener 4 can be made to grip around the cable 5 by means of clamping screws 4a. Correspondingly, the stay tightener 4' can be made to grip the cable 5 by means of the clamping screw 4b, when the clamping screw 4b pushes in front of it a jaw piece 4c with teeth that penetrate through the cable 5 insulation. Also in the embodiment of Figure 1 there may be teeth on the gripping surfaces of the stay tightener 4 which penetrate through the cable insulation, which means that a metallic conductor can be gripped also when coated cables are used. This gripping through the insulation can be utilised also for bringing the potential out of the cable, whereby the potential of the cable can be connected to the anchor clamp body, for example, by means of a wire (not shown) between the stay tightener 4, 4' and the body 1. Alternatively, the potential connection between the stay tightener and the body can be implemented, for example, by means of a crossbar arranged on the handle 3, the contact of which bar is secured by spring loading.

The locking of the stay tightener 4, 4' around the cable may also be carried out by other means than a clamping screw, for example, by means of an eccentric or a cam lever. What is essential is that by means of the stay tightener is accomplished a grip on the cable 5 that is independent of the pulling movement of the wedges 2. The stay tightener 4, 4' constitutes a stopper means for the wedge pieces 2, which moves the wedge parts 2 in the direction of pulling due to the pulling of the cable.

The stay tightener does not have to be separate from the rest of the structure, but may be combined in connection with the protruding ends of the wedge parts 2.

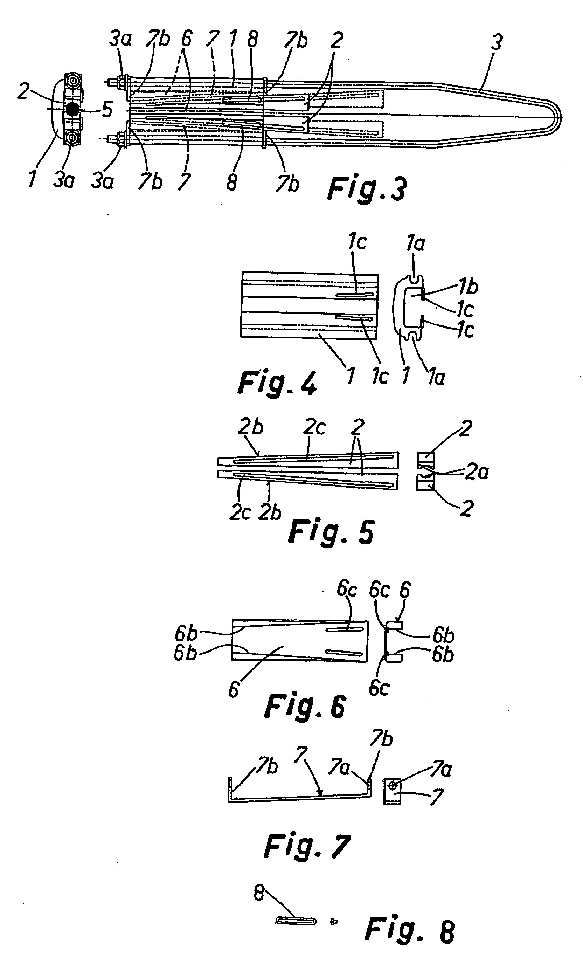

On the upper and/or lower surfaces of the wedge parts 2 are guide grooves 2c parallel with their wedge surfaces 2b. In the plastic part 6 and body 1 are protrusions 6c and 8 matching with these grooves 2c. The guide protrusion 8 is a separate piece (Fig. 8) which is pressed through the openings 1c on the thin side surface of the body 1. In this way the wedge parts 2 can be locked in place so that they can only move in the direction of their wedge surfaces. The wedge parts 2 may be of plastic or aluminium.

## Claims

1. An anchor clamp for the termination of an overhead cable, which comprises
- a body (1);
- a clamp handle (3) fixed to the body (1) or a part connected to the body; and
- wedge parts (2) moving in relation to the body, between which the overhead cable (5) is pressed when pulling directed at the cable moves the wedge parts (2) in relation to the body (1),
**characterised in that** the clamp comprises a stay tightener (4, 4') located at the wider end of the wedge parts (2), or in front of the wider end, and forms a stopper means, which moves the wedge parts (2) in the direction of pulling due to the pulling, and which stay tightener (4, 4') is made, by means of a clamping screw (4a, 4b) or otherwise independently of the pulling movement of the wedges (2), to grip around the cable (5), pressing directly on the conductor metal, in the case of a coated cable, through the cable insulation.

2. An anchor clamp as claimed in claim 1, **characterised in that** the stay tightener (4, 4') comprises teeth that penetrate through the cable insulation, and that there is a potential connection between the stay tightener (4, 4') and the anchor clamp body (1), which connects the body (1) to the same potential with the cable.

3. An anchor clamp as claimed in claim 1 or 2, **characterised in that** in the body (1) is a separate plastic part (6), in which the wedge parts 2 are received between the wedge surfaces (6b) of the plastic part (6), and that between the wedge surfaces (6b) of the plastic part and the wedge surfaces (2b) of the wedge parts are metallic splice plates (7), the bent ends (7b) of which partly cover the opposite ends of the body (1) and the plastic part (6), thus keeping the plastic part (6) in its place in the body (1).

4. An anchor clamp as claimed in claim 3, **characterised in that** on the opposite outer sides of the body (1) are grooves (1a) and on the bent ends (7b) of the splice plates (7) are holes (7a) at the grooves (1a) of the body for the lead-through of the clamp handle (3), and that at the ends of the branches of the clamp handle (3) are threads and adjusting screws (3a), which rest against the bent ends (7b) of the splice plates (7).

5. An anchor clamp as claimed in any of the claims 1 to 4, **characterised in that** the wider ends of the wedge parts (2) protrude from the body (1), that is, the wedge parts (2) are essentially longer than the body (1).

6. An anchor clamp as claimed in any of the claims 1 to 5, **characterised in that** on the surfaces of the wedge parts (2) facing each other are cable grooves (2a), on the bottoms of which has been cut transverse grooving, the plane of the grooves being inclined in relation to the normal plane of the cable grooves.

7. An anchor clamp as claimed in any of the claims 3 to 6, **characterised in that** on the upper and/or lower surfaces of the wedge parts (2) are guide grooves (2c) parallel with their wedge surfaces (2b), and that in the plastic part (6) and/or in the body (1) are protrusions (6c and/or 8) matching with the guide grooves (2c).

## Patentansprüche

1. Ankerklemme zum Anschluss eines Freileitungskabels, welche umfasst:
- einen Körper (1);
- einen Klemmenhandgriff (3), welcher am Körper (1) oder an einem Teil befestigt ist, der mit dem Körper verbunden ist; und
- Keilteile (2), welche sich in Bezug zum Körper bewegen, zwischen welchen das Freileitungskabel (5) eingeklemmt wird, wenn der Zug, der auf das Kabel ausgeübt wird, die Keilteile (2) in Bezug auf den Körper (1) bewegt,
**dadurch gekennzeichnet, dass** die Klemme einen Anschlagspanner (4, 4') umfasst, welcher an dem breiteren Ende der Keilteile (2) oder vor dem breiteren Ende angeordnet ist und welcher ein Anschlagmittel ausbildet, das die Keilteile (2) in die Richtung des Zugs auf Grund des Ziehens bewegt und wobei der Anschlagspanner (4, 4') mittels einer Klemmschraube (4a, 4b) oder auf andere Weise unabhängig von der Zugbewegung der Keile (2) aufgebaut ist, um das Kabel (5) durch direktes Drücken auf das leitende Metall zu umgreifen, im Falle eines isolierten Kabels durch die Kabelisolierung hindurch.

2. Ankerklemme nach Anspruch 1, **dadurch gekennzeichnet, dass** der Anschlagspanner (4, 4') Zähne umfasst, welche durch die Kabelisolierung hindurchdringen und dass es eine Potentialverbindung zwischen dem Anschlagspanner (4, 4') und dem Ankerklemmkörper (1) gibt, welche den Körper (1) auf dasselbe Potential mit dem Kabel bringt.

3. Ankerklemme nach Anspruch 1 oder 2, **dadurch gekennzeichnet, dass** sich im Körper (1) ein eigener Kunststoffteil (6) befindet, in welchem die Keilteile (2) zwischen den Keiloberflächen (6b) des Kunststoffteils (6) aufgenommen werden, und dass sich zwischen den Keiloberflächen (6b) des Kunststoffteils und den Keiloberflächen (2b) der Keilteile Stoßplatten (7) befinden, deren aufgebogene Enden (7b) teilweise die gegenüberliegenden Enden des Körpers (1) und des Kunststoffteils (6) abdecken, wodurch der Kunststoffteil (6) auf seinem Platz im Körper (1) gehalten wird.

4. Ankerklemme nach Anspruch 3, **dadurch gekennzeichnet, dass** auf den gegenüberliegenden äußeren Seiten des Körpers (1) Nuten (1a) sind und sich auf den aufgebogenen Enden (7b) der Stoßplatten (7) Löcher (7a) bei den Nuten (1a) des Körpers für eine Durchführung des Klemmenhandgriffs (3) befinden und dass an den Enden der Schenkel des Klemmenhandgriffs (3) Gewinde und Einstellschrauben (3a) vorgesehen sind, welche sich an den gebogenen Enden (7b) der Stoßplatten (7) abstützen.

5. Ankerklemme nach einem beliebigen der Ansprüche 1 bis 4, **dadurch gekennzeichnet, dass** die breiteren Enden der Keilteile (2) aus dem Körper (1) vorragen, das heißt, dass die Keilteile (2) wesentlich länger sind als der Körper (1).

6. Ankerklemme nach einem beliebigen der Ansprüche 1 bis 5, **dadurch gekennzeichnet, dass** sich auf den Oberflächen der Keilteile (2), welche einander zugewandt sind, Kabelnuten (2a) befinden, auf deren Grund Querriefen eingeschnitten sind, wobei die Ebene der Riefen in Bezug auf die Normalebene der Kabelnuten geneigt ist.

7. Ankerklemme nach einem beliebigen der Ansprüche 3 bis 6, **dadurch gekennzeichnet, dass** auf der oberen und/oder der unteren Oberfläche der Keilteile (2) Führungsnuten (2c) parallel zu ihren Keiloberflächen (2b) vorgesehen sind und dass sich im Kunststoffteil (6) und/oder im Körper (1) Vorsprünge (6c und/oder 8) befinden, welche zu den Führungsnuten (2c) passen.

## Revendications

1. Pince d'ancrage pour la terminaison d'un câble aérien, qui comprend :
- un corps (1) ;
- un manche de pince (3) fixé sur le corps (1) ou sur une partie reliée au corps ; et
- des parties de coin (2) se déplaçant par rapport au corps, entre lesquelles le câble aérien (5) est pressé lorsqu'un tirage dirigé au niveau du câble déplace les parties de coin (2) par rapport au corps (1),
**caractérisée en ce que** la pince comprend un dispositif de serrage et de maintien (4, 4') situé à l'extrémité la plus large des parties de coin (2), ou devant l'extrémité la plus large, et forme un moyen de butée, qui déplace les parties de coin (2) dans la direction de tirage sous l'effet du tirage, et ledit dispositif de serrage et de maintien (4, 4') est constitué, au moyen d'une vis de serrage (4a, 4b) ou autrement indépendamment du mouvement de tirage des coins (2), pour s'accrocher autour du câble (5), en pressant directement sur le métal conducteur, dans le cas d'un câble enduit, à travers l'isolation de câble.

2. Pince d'ancrage selon la revendication 1, **caractérisée en ce que** le dispositif de serrage et de maintien (4, 4') comprend des dents qui pénètrent à travers l'isolation de câble, et **en ce qu'**il y a une connexion de potentiel entre le dispositif de serrage et de maintien (4, 4') et le corps de pince d'ancrage (1), qui connecte le corps (1) au même potentiel avec le câble.

3. Pince d'ancrage selon la revendication 1 ou 2, **caractérisée en ce que** le corps (1) est une partie en plastique distincte (6), dans laquelle les parties de coin (2) sont reçues entre les surfaces de coin (6b) de la partie en plastique (6), et **en ce que**, entre les surfaces de coin (6b) de la partie en plastique et les surfaces de coin (2b) des parties de coin, se trouvent des plaques d'épissure métalliques (7), dont les extrémités repliées (7b) recouvrent partiellement les extrémités opposées du corps (1) et la partie en plastique (6), en maintenant ainsi la partie en plastique (6) à sa place dans le corps (1).

4. Pince d'ancrage selon la revendication 3, **caractérisée en ce que**, sur les côtés extérieurs opposés du corps (1), se trouvent des rainures (1a), et, aux extrémités repliées (7b) des plaques d'épissure (7), se trouvent des trous (7a) au niveau des rainures (1a) du corps pour le passage du manche de pince (3), et **en ce que**, aux extrémités des branches du manche de pince (3), se trouvent des filetages et des vis de réglage (3a) qui reposent contre les extrémités repliées (7b) des plaques d'épissure (7).

5. Pince d'ancrage selon l'une quelconque des revendications 1 à 4, **caractérisée en ce que** les extrémités plus larges des parties de coin (2) font saillie du corps (1), c'est-à-dire que les parties de coin (2) sont sensiblement plus longues que le corps (1).

6. Pince d'ancrage selon l'une quelconque des revendications 1 à 5, **caractérisée en ce que**, sur les surfaces des parties de coin (2) étant face à face, se trouvent des rainures de câble (2a), au fond desquelles des gorges transversales ont été coupées, le plan des rainures étant incliné par rapport au plan normal des rainures de câble.

7. Pince d'ancrage selon l'une quelconque des revendications 3 à 6, **caractérisée en ce que** les surfaces supérieures et/ou inférieures des parties de coin (2) sont des rainures de guidage (2c) parallèles à leurs surfaces de coin (2b), et **en ce que**, dans la partie en plastique (6) et/ou dans le corps (1), se trouvent des saillies (6c et/ou 8) correspondant aux rainures de guidage (2c).
